# EUROPÄISCHE PATENTANMELDUNG

(11) **EP 4 671 879 A1**
(43) Veröffentlichungstag der Anmeldung: **31.12.2025**
(21) Anmeldenummer: 24184199.8
(22) Anmeldetag: 25.06.2024
(51) Int. Cl.: G05B 13/02

(54) **REGELUNGSSYSTEM**

(71) Anmelder: Siemens Aktiengesellschaft, 80333 München (DE)
(72) Erfinder: Gabriel, Gino, 09112 Chemnitz (DE); Griessbach, Gunter, 09423 Gelenau (DE); Mauersberger, Max André, 09221 Neukirchen/Erzgebirge (DE)
(74) Vertreter: Siemens Patent Attorneys

(57) **Zusammenfassung**

Die Erfindung betrifft ein Regelungssystem, aufweisend:
- eine Controllerstruktur, in der eine künstliche Intelligenz (3) implementiert ist,
- einen Regler (6) für eine Regelstrecke (8), die mittels mindestens einer Stellgröße (9) des Reglers (6) ansteuerbar oder angesteuert ist und mindestens eine Regelgröße (13) ausgibt, wobei dem Regler (6) und/oder der künstlichen Intelligenz (3) mindestens eine Führungsgröße (4) oder eine Differenz aus der mindestens einen Führungsgröße (4) und einer Eingangsgröße oder einer modifizierten Eingangsgröße zuführbar ist, wobei das Regelungssystem als ein Modul einer speicherprogrammierbaren Steuerung ausgebildet ist, wobei ferner ein Analog-Frontend (2) zur Erfassung analoger Signale von mindestens einem Sensor (10), der die Regelgröße (13) erfasst, und zur Verarbeitung dieser Signale zu der mindestens einen Eingangsgröße oder modifizierten Eingangsgröße und deren Bereitstellung für die künstliche Intelligenz (3) und/oder den Regler (6) angeordnet ist, wobei das Analog-Frontend (2) als Teil des Moduls oder als separate Einheit ausgebildet ist.

## Beschreibung

Die Erfindung betrifft ein Regelungssystem mit den Merkmalen des Anspruchs 1.

Bei dezentralen Peripheriesystemen wie beispielsweise speicherprogrammierbaren Steuerungen werden Aufgaben der Regelung von Prozessvorgängen durch mehrere Module realisiert. Beispielsweise kann ein analog arbeitender Temperaturregler ein Analog-Eingabemodul, ein Analog-Ausgabemodul und optional mehrere Hilfsmodule (Digital-Ein- und Ausgaben) aufweisen. Die Regelgrößen werden von diesen Modulen per Feldbus zu einer CPU übertragen, dort mittels Regelalgorithmus in einem Anwenderprogramm verarbeitet und die Resultate wieder zurück zur Ausgabebaugruppe transferiert. Bisher gibt es kein Regler-Modul, welches diese gesamte Aufgabe "onboard" übernimmt und damit den Kommunikationsaufwand reduziert sowie gleichzeitig auch die Regeldynamik verbessern kann.

In arXiv:2201.06961, AI for Closed-Loop Control Systems, Schöning, Riechmann, Pfisterer, 2022 sind Regelungen auf Basis von künstlicher Intelligenz beschrieben.

Der Erfindung liegt die Aufgabe zu Grunde, ein neuartiges Regelungssystem anzugeben.

Die Aufgabe wird erfindungsgemäß gelöst durch ein Regelungssystem mit den Merkmalen des Anspruchs 1.

Vorteilhafte Ausgestaltungen der Erfindung sind Gegenstand der Unteransprüche.

Erfindungsgemäß wird ein Regelungssystem vorgeschlagen, aufweisend:
- eine Controllerstruktur, in der eine künstliche Intelligenz implementiert ist,
- einen Regler für eine Regelstrecke, die mittels mindestens einer Stellgröße des Reglers ansteuerbar oder angesteuert ist und mindestens eine Regelgröße ausgibt,

wobei dem Regler und/oder der künstlichen Intelligenz mindestens eine Führungsgröße oder eine Differenz aus der mindestens einen Führungsgröße und einer Eingangsgröße oder einer modifizierten Eingangsgröße zuführbar ist, wobei das Regelungssystem als ein Modul einer speicherprogrammierbaren Steuerung ausgebildet ist,
wobei ferner ein Analog-Frontend zur Erfassung analoger Signale von mindestens einem Sensor, der die Regelgröße erfasst, und zur Verarbeitung dieser Signale zu der mindestens einen Eingangsgröße oder modifizierten Eingangsgröße und deren Bereitstellung für die künstliche Intelligenz und/oder den Regler angeordnet ist, wobei das Analog-Frontend als Teil des Moduls oder als separate Einheit ausgebildet ist.

In einer Ausführungsform ist das analoge Frontend zur Digitalisierung und/oder Verarbeitung der Signale des Sensors zu einem Spannungswert, einem Stromwert, einem FFT-Spektrum und/oder zu einem Impedanzspektrum konfiguriert.

In einer Ausführungsform ist die künstliche Intelligenz als ein neuronales Netz oder als ein interpretierbarer und erklärbarer Algorithmus, insbesondere als eine Support Vector Machine oder ein Learning Vector Quantisierer, ausgebildet.

In einer Ausführungsform ist die künstliche Intelligenz zur Übernahme der Funktion des Reglers angeordnet und konfiguriert, um an dessen Stelle die mindestens eine Stellgröße bereitzustellen, wobei ein Umschalter angeordnet ist, der zum Umschalten zwischen der mindestens einen Stellgröße des Reglers und der mindestens einen Stellgröße der künstlichen Intelligenz konfiguriert ist, um diese der Regelstrecke zuzuführen.

In einer Ausführungsform ist der Umschalter zum Umschalten in Abhängigkeit von mindestens einem Schwellwert konfiguriert. Der Umschalter kann durch Software realisiert werden.

In einer Ausführungsform ist die künstliche Intelligenz zum Finetuning der mindestens einen Stellgröße des Reglers konfiguriert.

In einer Ausführungsform ist die künstliche Intelligenz zur Bereitstellung der mindestens einen Stellgröße oder mindestens eines Korrekturwerts für die mindestens eine Stellgröße, insbesondere zur Selektion von Klassen bei einem Klassifizierungsproblem oder zur Selektion von numerischen Attributwerten bei einem Regressionsproblem, als Reaktion auf die mindestens eine Eingangsgröße, auf in dem Regelungssystem gespeicherte, aufgezeichnete Prozessdaten und auf Störgrößen konfiguriert, welche die Regelstrecke beeinflussen.

In einer Ausführungsform ist die künstliche Intelligenz dazu konfiguriert, in einer Phase des Lernens bestimmte zeitlich aufeinanderfolgende Messwerte mit Labels zu versehen und diese den Klassen zuzuordnen.

In einer Ausführungsform ist das Regelverhalten des Reglers erfahrungsbasiert anlernbar.

Ausführungsbeispiele der Erfindung werden im Folgenden anhand von Zeichnungen näher erläutert.

Darin zeigen:
- Fig. 1: eine schematische Ansicht einer Ausführungsform eines Micro-Kl-Moduls, und
- Fig. 2: eine schematische Ansicht einer weiteren Ausführungsform eines Micro-Kl-Moduls.

Einander entsprechende Teile sind in allen Figuren mit den gleichen Bezugszeichen versehen.

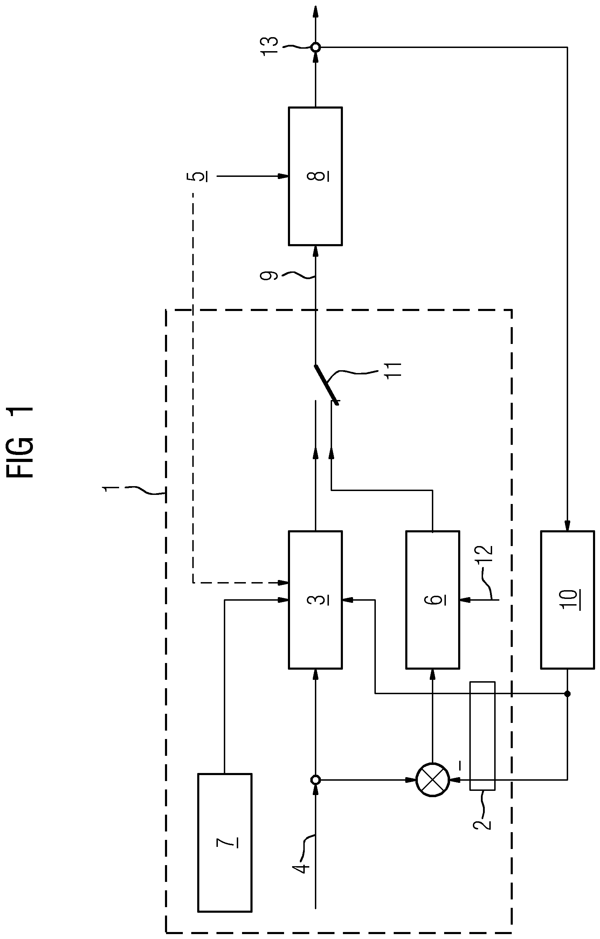

Figur 1 ist eine schematische Ansicht eines Micro-Kl-Moduls 1. Unter einem Micro-KI-Modul 1 im Sinne der vorliegenden Erfindung wird ein Modul einer speicherprogrammierbaren Steuerung verstanden, welches ein Analog-Frontend 2 zur Erfassung analoger Signale von mindestens einem Sensor 10 und gegebenenfalls zur Verarbeitung dieser Signale, beispielsweise zu FFT-Spektren und/oder Impedanz-Spektren, sowie eine Controllerstruktur, in der eine künstliche Intelligenz 3, beispielsweise ein neuronales Netz, implementiert ist, beinhaltet. Weiterhin verhält sich das Micro-KI-Modul 1 wie ein normales Elektronikmodul einer modular aufgebauten speicherprogrammierten Steuerung. Die Bezeichnung Micro-KI-Modul 1 resultiert aus dem minimalistischen Ansatz einer Kl (künstliche Intelligenz 3) auf dezentraler Peripherie, insbesondere minimalistisch hinsichtlich Baugröße, Verlustleistung und Herstellungskosten bei gleichzeitig hoher Performance für spezielle, häufig vorkommende Anwendungen.

Das Micro-KI-Modul 1 weist ferner einen Regler 6 für eine Regelstrecke 8 auf, die mittels mindestens einer Stellgröße 9 des Reglers 6 angesteuert werden kann und mindestens eine Regelgröße 13 ausgibt, die von dem mindestens einen Sensor 10 erfasst werden kann.

Das Micro-KI-Modul 1 ist dazu konfiguriert, mindestens eine analoge Eingangsgröße (Messwert) von dem mindestens einen Sensor 10 zu erfassen, die im Analog-Frontend 2 optional zu einer modifizierten Eingangsgröße aufbereitet wird, beispielsweise als Spannungswert, Stromwert oder in Form eines FFT-Spektrums und/oder eines Impedanzspektrums, insbesondere in digitalisierter Form, und die Eingangsgröße oder die modifizierte Eingangsgröße der im Micro-KI-Modul 1 integrierten künstlichen Intelligenz 3 zur Verfügung zu stellen. Des Weiteren werden der künstlichen Intelligenz 3 auch Störgrößen 5 zugeführt, welche die Regelstrecke 8 beeinflussen. In Figur 1 ist die künstliche Intelligenz 3 (beispielsweise eine Support Vector Machine, ein Learning Vector Quantisierer oder ähnliches) so ausgelegt, dass sie die Funktion des Reglers 6 übernehmen kann und an dessen Stelle die mindestens eine Stellgröße 9 bereitstellt, wobei das Regelverhalten des Reglers 6 erfahrungsbasiert angelernt werden kann.

Ferner kann dem Regler 6 und/oder der künstlichen Intelligenz 3 mindestens eine Führungsgröße 4 oder eine Differenz aus der mindestens einen Führungsgröße 4 und der Eingangsgröße oder der modifizierten Eingangsgröße zugeführt werden. Dem Regler 6 kann darüber hinaus mindestens ein statischer Parameter 12 zugeführt werden. Der künstlichen Intelligenz 3 können darüber hinaus im Micro-KI-Modul 1 gespeicherte, aufgezeichnete Prozessdaten 7 zugeführt werden.

Ferner ist ein Umschalter 11 vorgesehen, der zum Umschalten zwischen der mindestens einen Stellgröße 9 des Reglers 6 und der mindestens einen Stellgröße 9 der künstlichen Intelligenz 3 konfiguriert ist, um diese der Regelstrecke 8 zuzuführen.

Um funktionale Sicherheit bereitzustellen, wird durch die Umschaltbarkeit mittels des Umschalters 11 ein Rückfallpfad geschaffen, wodurch die künstliche Intelligenz 3 beispielsweise abhängig von mindestens einem Schwellwert deaktiviert werden kann.

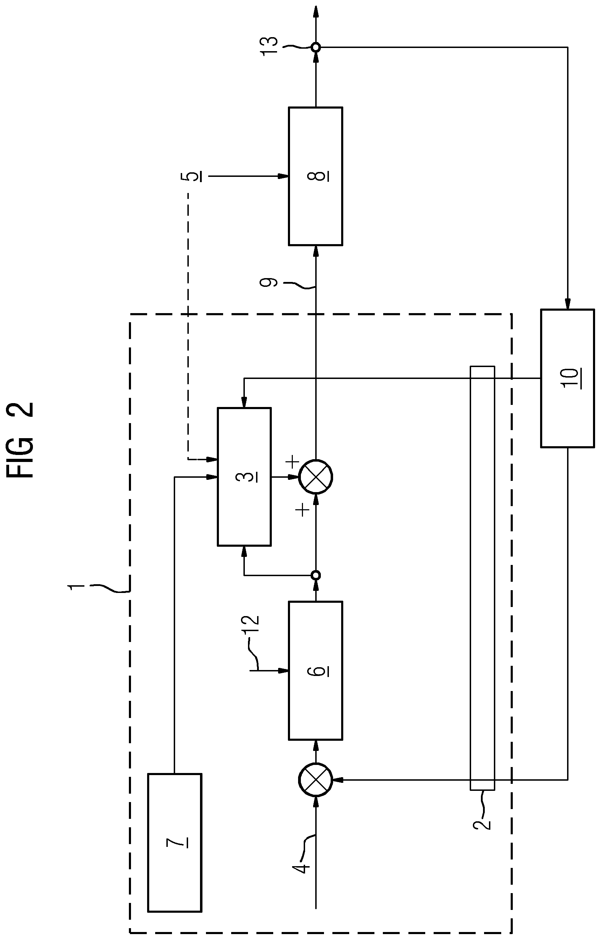

Figur 2 ist eine schematische Ansicht einer weiteren Ausführungsform eines Micro-Kl-Moduls 1, bei dem die künstliche Intelligenz 3 ein Finetuning der mindestens einen Stellgröße 9 des Reglers 6 vornehmen kann, beispielsweise durch Addition eines jeweiligen Korrekturwerts zu der mindestens einen Stellgröße 9. Es ist ein Analog-Frontend 2 zur Erfassung analoger Signale von mindestens einem Sensor 10 und gegebenenfalls zur Verarbeitung dieser Signale, beispielsweise zu FFT-Spektren und/oder Impedanz-Spektren, sowie eine Controllerstruktur, in der eine künstliche Intelligenz 3, beispielsweise ein neuronales Netz implementiert ist, angeordnet.

Das Micro-KI-Modul 1 weist ferner einen Regler 6 für eine Regelstrecke 8 auf, die mittels mindestens einer Stellgröße 9 des Reglers 6 angesteuert werden kann und mindestens eine Regelgröße 13 ausgibt, die von dem mindestens einen Sensor 10 erfasst werden kann.

Das Micro-KI-Modul 1 ist dazu konfiguriert, mindestens eine analoge Eingangsgröße (Messwert) von dem mindestens einen Sensor 10 zu erfassen, die im Analog-Frontend 2 optional zu einer modifizierten Eingangsgröße aufbereitet wird, beispielsweise als Spannungswert, Stromwert oder in Form eines FFT-Spektrums und/oder eines Impedanzspektrums, insbesondere in digitalisierter Form, und die Eingangsgröße oder die modifizierte Eingangsgröße und/oder deren Differenz zu einer Führungsgröße 4 dem Regler 6 und/oder der künstlichen Intelligenz 3 zur Verfügung zu stellen. Des Weiteren werden der künstlichen Intelligenz 3 auch Störgrößen 5 zugeführt, welche die Regelstrecke 8 beeinflussen.

Dem Regler 6 kann darüber hinaus mindestens ein statischer Parameter 12 zugeführt werden. Der künstlichen Intelligenz 3 können darüber hinaus im Micro-KI-Modul 1 gespeicherte, aufgezeichnete Prozessdaten 7 zugeführt werden.

Die Regelsystem-Architekturen in den Figuren 1 und 2 wurden aus dem Paper "AI for Closed-Loop Control Systems" (Quelle: arXiv:2201.06961, AI for Closed-Loop Control Systems, Schöning, Riechmann, Pfisterer, 2022) abgeleitet und modifiziert. Da in diesen Architekturen die künstliche Intelligenz 3 direkt in die Regelstrecke 8 eingreift und gegebenenfalls Aktoren steuert, wird in der vorliegenden Erfindung anders als im genannten Paper in der künstlichen Intelligenz 3 ein Algorithmus (beispielsweise eine Support Vector Machine, ein Learning Vector Quantizer, usw.) implementiert, welcher interpretierbar und erklärbar ist und keine Blackbox wie ein tieferes neuronales Netz darstellt.

Dabei entsprechen die durch die künstliche Intelligenz ermittelten Ergebnisse den Reaktionen auf die ausgewerteten Messwerte, auf bereits aufgezeichnete Prozessdaten 7 und auf die Störgrößen 5. Die Ergebnisse werden als numerische Attributwerte dargestellt, da im Falle eines Regelkreises, bei dem die künstliche Intelligenz 3 Einfluss auf die Stellgröße 9 ausübt, von einem Regressionsproblem gesprochen wird. Soll jedoch die künstliche Intelligenz 3 die Stellgröße 9 mit einer zuvor definierten Anzahl fester Attributwerte (Klassen) im Regelkreis beeinflussen, dann spricht man von einem Klassifizierungsproblem, wo ein unbekannter kategorialer Attributwert ermittelt wird.

In einer Phase des Lernens (Regressionsproblem) der künstlichen Intelligenz 3 werden bestimmte zeitlich aufeinanderfolgende Messwerte (Verläufe) mit Labeln versehen, welche die numerischen Attributwerte darstellen.

In einer Phase des Lernens (Klassifizierungsproblem) der künstlichen Intelligenz 3 werden bestimmte zeitlich aufeinanderfolgende Messwerte (Verläufe) mit Labeln versehen, welche die kategorialen Attributwerte (Klassen) darstellen.

In Figur 1 gibt entweder die künstliche Intelligenz 3 oder der Regler 6 die Stellgrößen 9 vor. In Figur 2 nimmt die künstliche Intelligenz 3 lediglich eine Korrektur der Stellgrößen 9 in vordefinierten Grenzen vor. Die in Figur 2 gezeigte Ausführungsform erfüllt damit die Funktion eines früher als Fuzzy-Logik bezeichneten Verhaltens. Durch die künstliche Intelligenz 3 erweitern sich die Möglichkeiten gegenüber der Fuzzy-Logik jedoch erheblich, so dass eine Verallgemeinerung des Verhaltens ermöglicht wird. Durch die Möglichkeit des Lernens werden die Regelabläufe sukzessive optimiert und an die Regelstrecke 8 adaptiert. Die Ausgangsgrößen (Stellgrößen 9) des Reglers 6 sind die der ermittelten Klasse zugeordneten Sollwerte, die über die speicherprogrammierte Steuerung an Aktoren übergeben werden können, die Teil der Regelstrecke 8 sein können.

Durch die Möglichkeit des lernenden Reglers 6 wird eine adaptive Regelung auf neuem Niveau erreicht. Dies stellt eine neue Qualität im Vergleich mit Fuzzy-Reglern dar.

In einer beispielhaften Ausführungsform für ein Klassifizierungsproblem wird ein Heizungsregler angenommen. In der Anlernphase werden für typische Wetterlagen (Messwerte: Außentemperatur, Wind, Regen, Luftdruck, Uhrzeit ...) die erforderlichen Raumtemperaturen entsprechend eines Wohlfühlempfindens gelabelt. Es können viele beliebige Verläufe aufgenommen werden, mit unterschiedlichen Gradienten der Messwerte. Weiterhin gibt es die Möglichkeit, auf unterschiedliche Typen von Menschen (kälteempfindlich, leicht schwitzend, aktiv, eher passiv, abends gemütlich ...) einzugehen und diese als Parameter vorzugeben. Im Ergebnis ist die Heizung erheblich besser an die Bedürfnisse angepasst.

In nicht dargestellten Ausführungsformen kann das Analog-Frontend 2 eine separate Einheit sein, die nicht Teil des Micro-Kl-Moduls 1 ist.

Weitere mögliche Anwendungen bestehen im Bereich der Solarenergiegewinnung. Hier können beispielsweise individuelle Besonderheiten eines Aufstellungsortes bis hin zu Effizienzkurven von Solarpaneelen in Abhängigkeit der Außentemperatur mit in das Regelverhalten einbezogen werden. Gleiches gilt sinngemäß auch für die Nutzung von Energie aus Akku-Banken, beispielsweise bei der Elektromobilität.

Die vorliegende Erfindung ermöglicht die Optimierung von erfahrungsbasierten Regelvorgängen auf Basis eines universellen Micro-KI-Moduls 1 eines Automatisierungsgerätes (beispielsweise einer speicherprogrammierten Steuerung). Durch den Einsatz einer künstlichen Intelligenz 3 ist dieses Verhalten sehr genau an sich stark ändernden Eingangsbedingungen anpassbar, ohne dass der Regler 6 mit rein analytischen Methoden konfiguriert werden muss. Es können dabei unterschiedliche Bedingungen berücksichtigt werden, die formal schwer zuordenbar sind. Unabhängig vom grammatikalischen Geschlecht eines bestimmten Begriffes sind Personen mit männlicher, weiblicher oder anderer Geschlechteridentität mit umfasst.

## Patentansprüche

1. Regelungssystem, aufweisend:
- eine Controllerstruktur, in der eine künstliche Intelligenz (3) implementiert ist,
- einen Regler (6) für eine Regelstrecke (8), die mittels mindestens einer Stellgröße (9) des Reglers (6) ansteuerbar oder angesteuert ist und mindestens eine Regelgröße (13) ausgibt,
wobei dem Regler (6) und/oder der künstlichen Intelligenz (3) mindestens eine Führungsgröße (4) oder eine Differenz aus der mindestens einen Führungsgröße (4) und einer Eingangsgröße oder einer modifizierten Eingangsgröße zuführbar ist, wobei das Regelungssystem als ein Modul einer speicherprogrammierbaren Steuerung ausgebildet ist,
wobei ferner ein Analog-Frontend (2) zur Erfassung analoger Signale von mindestens einem Sensor (10), der die Regelgröße (13) erfasst, und zur Verarbeitung dieser Signale zu der mindestens einen Eingangsgröße oder modifizierten Eingangsgröße und deren Bereitstellung für die künstliche Intelligenz (3) und/oder den Regler (6) angeordnet ist, wobei das Analog-Frontend (2) als Teil des Moduls oder als separate Einheit ausgebildet ist.

2. Regelungssystem nach Anspruch 1, wobei das analoge Frontend (2) zur Digitalisierung und/oder Verarbeitung der Signale des Sensors (10) zu einem Spannungswert, einem Stromwert, einem FFT-Spektrum und/oder zu einem Impedanzspektrum konfiguriert ist.

3. Regelungssystem nach Anspruch 1 oder 2, wobei die künstliche Intelligenz (3) als ein neuronales Netz oder als ein interpretierbarer und erklärbarer Algorithmus implementiert ist.

4. Regelungssystem nach Anspruch 3, wobei die künstliche Intelligenz (3) als eine Support Vector Machine oder ein Learning Vector Quantisierer ausgebildet ist.

5. Regelungssystem nach einem der vorhergehenden Ansprüche, wobei die künstliche Intelligenz (3) zur Übernahme der Funktion des Reglers (6) angeordnet und konfiguriert ist, um an dessen Stelle die mindestens eine Stellgröße (9) bereitzustellen, wobei ein Umschalter (11) angeordnet ist, der zum Umschalten zwischen der mindestens einen Stellgröße (9) des Reglers (6) und der mindestens einen Stellgröße (9) der künstlichen Intelligenz (3) konfiguriert ist, um diese der Regelstrecke (8) zuzuführen.

6. Regelungssystem nach Anspruch 5, wobei der Umschalter (11) zum Umschalten in Abhängigkeit von mindestens einem Schwellwert konfiguriert ist.

7. Regelungssystem nach einem der Ansprüche 1 bis 4, wobei die künstliche Intelligenz (3) zum Finetuning der mindestens einen Stellgröße (9) des Reglers (6) konfiguriert ist.

8. Regelungssystem nach einem der vorhergehenden Ansprüche, wobei die künstliche Intelligenz (3) zur Bereitstellung der mindestens einen Stellgröße (9) oder mindestens eines Korrekturwerts für die mindestens eine Stellgröße (9), insbesondere zur Selektion von Klassen bei einem Klassifizierungsproblem oder zur Selektion von numerischen Attributwerten bei einem Regressionsproblem, als Reaktion auf die mindestens eine Eingangsgröße, auf in dem Regelungssystem gespeicherte, aufgezeichnete Prozessdaten (7) und auf Störgrößen (5) konfiguriert ist, welche die Regelstrecke (8) beeinflussen.

9. Regelungssystem nach Anspruch 8, wobei die künstliche Intelligenz (3) dazu konfiguriert ist, in einer Phase des Lernens bestimmte zeitlich aufeinanderfolgende Messwerte mit Labeln zu versehen und diese den kategorialen Attributwerten (Klassifizierungsproblem) oder den numerischen Attributwerten (Regressionsproblem) zuzuordnen.

10. Regelungssystem nach einem der vorhergehenden Ansprüche, wobei das Regelverhalten des Reglers (6) erfahrungsbasiert anlernbar ist.
